# EUROPÄISCHE PATENTANMELDUNG

(11) **EP 1 839 794 A1**
(43) Veröffentlichungstag der Anmeldung: **03.10.2007**
(21) Anmeldenummer: 06006614.9
(22) Anmeldetag: 29.03.2006
(51) Int. Cl.: B23H 7/38, B23H 9/14, B23H 11/00

(54) **Verfahren zur funkenerosiven Bearbeitung eines elektrisch nichtleitenden Materials**

(71) Anmelder: SIEMENS AKTIENGESELLSCHAFT, 80333 München (DE); Albert-Ludwigs-Universität Freiburg, 79085 Freiburg (DE)
(72) Erfinder: Förster, Ralf, Dr., 12623 Berlin (DE); Klein, Karsten, Dr., 14089 Berlin (DE); Laudien, Ulrich, 10555 Berlin (DE); Settegast, Silke, 10439 Berlin (DE); Subramanian, Ramesh, Dr., 10777 Berlin (DE)

(57) **Zusammenfassung**

Die Erfindung betrifft ein Verfahren zur funkenerosiven Bearbeitung eines elektrisch nichtleitenden Materials (1), bei dem auf das elektrisch nichtleitende Material (1) eine Assistenzelektrode (2) aufgebracht wird, die Assistenzelektrode (2) und eine Arbeitselektrode (3) unmittelbar benachbart zueinander angeordnet und von einem Dielektrikum (6), das eine oder mehrere Additive enthalten kann, umgeben werden, und an die Assistenzelektrode (2) und die Arbeitselektrode (3) eine Spannung angelegt wird, wodurch es zu einer elektrischen Kontaktierung in Form einer Funkenentladung zwischen den Elektroden (2, 3) kommt, in deren Folge die Assistenzelektrode (2) und das elektrisch nichtleitenden Material (1) in einem Bearbeitungsbereich (8) abgetragen werden und gleichzeitig ein Teil des Dielektrikums (6) in Crackprodukte umgewandelt und auf dem nichtleitenden Material (1) abgeschieden wird, wobei ein zusätzliches elektrisches und/oder magnetisches und/oder elektromagnetisches Feld (7) erzeugt wird, welches die Crackprodukte und/oder Additive in Richtung des Bearbeitungsbereichs (8) ausrichtet und/oder beschleunigt.

## Beschreibung

Die Erfindung betrifft ein Verfahren zur funkenerosiven Bearbeitung eines elektrisch nichtleitenden Materials, bei dem auf das elektrisch nichtleitende Material eine Assistenzelektrode aufgebracht wird, die Assistenzelektrode und eine Arbeitselektrode unmittelbar benachbart zueinander angeordnet und von einem Dielektrikum, das eine oder mehrere Additive enthalten kann, umgeben werden, und an die Assistenzelektrode und die Arbeitselektrode eine Spannung angelegt wird, wodurch es zu einer elektrischen Kontaktierung in Form einer Funkenentladung zwischen den Elektroden kommt, in deren Folge die Assistenzelektrode und das elektrisch nichtleitende Material in einem Bearbeitungsbereich abgetragen werden und gleichzeitig ein Teil des Dielektrikums in Crackprodukte umgewandelt und auf dem nichtleitenden Material abgeschieden wird.

Funkenerosive Bearbeitungsverfahren für elektrisch nichtleitende Materialien sind im Stand der Technik bekannt. Sie werden u. a. eingesetzt, um in Bauteilen, die mit einer keramischen Beschichtung versehen sind, Bohrungen herzustellen. So werden etwa bei Turbinenschaufeln, die eine keramische Wärmedämmschicht auf einem metallischen Grundkörper aufweisen, Kühlluftbohrungen durch Funkenerosion hergestellt.

In der DE 41 02 250 A1 ist allgemein ein Verfahren zur funkenerosiven Bearbeitung elektrisch nichtleitender Materialien beschrieben. Bei diesem Verfahren wird das nichtleitende Material vor seiner Bearbeitung mit einer elektrisch leitenden Schicht beschichtet. Diese Schicht wird als Assistenzelektrode verwendet, die bei der funkenerosiven Bearbeitung eine elektrische Kontaktierung zu einer Arbeitselektrode herstellt. Das mit der Assistenzelektrode beschichtete, elektrisch nichtleitende Material und zumindest der zur Assistenzelektrode weisende Endbereich der Arbeitselektrode, an dem es bei der Bearbeitung zur Funkenentladung kommt, sind in ein Dielektrikum getaucht, das durch eine Flüssigkeit wie Kerosin oder durch ein Gas gebildet wird.

Wenn an die Anordnung eine Spannung angelegt wird, kommt es zwischen der Arbeitselektrode und der Assistenzelektrode zu einer Funkenentladung und in der Folge zu einem Abtrag der Assistenzelektrode sowie des darunter liegenden elektrisch nichtleitenden Materials. Gleichzeitig wird ein Teil des Dielektrikums in Crackprodukte umgewandelt, wobei Kohlenstoff oder leitfähige Carbide entstehen, die in Form einer elektrisch leitfähigen Schicht auf dem freigelegten Oberflächenbereich des nichtleitenden Materials abgeschieden werden. Die so abgeschiedene elektrisch leitende Schicht ersetzt somit das abgetragene Material der Assistenzelektrode und stellt bei einem Vordringen der Arbeitselektrode in das nichtleitende Material eine elektrische Verbindung zu der Oberfläche des nichtleitenden Materials her, so dass eine kontinuierliche Bearbeitung möglich ist.

Ein Problem des oben beschriebenen Verfahrens ist, dass sich die Crackprodukte in dem Dielektrikum verteilen und daher nicht nur im Bearbeitungsbereich auf dem bearbeiteten Bauteil abgeschieden werden. Infolgedessen wird die elektrisch leitfähige Schicht in dem Bearbeitungsbereich nur langsam ausgebildet, so dass die Bearbeitungsgeschwindigkeit begrenzt ist. Außerdem weist die neugebildete Schicht nur eine geringe Dicke auf, so dass sie leicht beschädigt werden kann mit der Folge, dass die elektrische Leitung zur Oberfläche unterbunden wird und der Prozess der funkenerosiven Bearbeitung zum Erliegen kommt.

Aufgabe der vorliegenden Erfindung ist es, ein Verfahren bereitzustellen, das eine schnelle und zuverlässige funkenerosive Bearbeitung eines elektrisch nichtleitenden Materials ermöglicht.

Die Aufgabe wird dadurch gelöst, dasse ein elektrisches und/oder magnetisches und/oder elektromagnetisches Feld erzeugt wird, welches die Crackprodukte und/oder Additive in Richtung des Bearbeitungsbereichs ausrichtet und/oder beschleunigt.

Grundgedanke des erfindungsgemäßen Verfahrens ist es, dafür zu sorgen, dass die durch die Funkenentladung gebildeten Crackprodukte mit Hilfe des erzeugten Feldes in die Richtung des Bearbeitungsbereichs ausgerichtet und beschleunigt werden, was dazu führt, dass sie bevorzugt in diesem Bereich abgeschieden werden. In analoger Weise wirkt das Feld auf eventuell in dem Dielektrikum enthaltene Additive, die ebenfalls ausgerichtet und beschleunigt und im Bearbeitungsbereich mit in die elektrisch leitende Schicht eingebunden werden.

Ein wesentlicher Vorteil des erfindungsgemäßen Verfahrens ist es, dass die Ausbildung der elektrisch leitenden Schicht im Bearbeitungsbereich auf dem elektrisch nichtleitenden Material schnell erfolgt. Auf diese Weise ist eine im Vergleich zu den im Stand der Technik bekannten Verfahren deutlich schnellere funkenerosive Bearbeitung von elektrisch nichtleitenden Materialien möglich. Da außerdem ein wesentlicher Teil der gebildeten Crackprodukte und der eventuell in dem Dielektrikum enthaltenen Additive im Bearbeitungsbereich abgeschieden werden, kann die elektrische Schicht derart ausgebildet werden, dass sie weitestgehend unempfindlich gegen Beschädigung ist und damit die Gefahr reduziert wird, dass die elektrische Kontaktierung unterbrochen wird.

In einer Ausbildungsform des erfindungsgemäßen Verfahrens wird ein elektromagnetisches Feld durch eine stromdurchflossene Spule erzeugt. Ein besonderer Vorteil ist hier, dass das Feld auf einfache Weise ein- und ausgeschaltet werden kann und seine Stärke zusätzlich durch die Regulierung des Stromes variiert werden kann.

Versuche haben gezeigt, dass das Verfahren besonders gut geeignet ist, um elektrisch nichtleitende Keramiken zu bearbeiten. Dies gilt besonders, wenn die Keramiken aus voll- oder teilstabilisiertem Zirkoniumoxid bestehen oder es enthalten. Derartige Werkstoffe werden häufig als Beschichtungen für Bauteile eingesetzt, die hohen Temperaturen ausgesetzt werden. Dazu gehören auch Teile von Turbinen, insbesondere Lauf-und Leitschaufeln. Da der Öffnungsbereich von Kühlluftbohrungen in Form eines Diffusors ganz oder teilweise in der keramischen Beschichtung ausgebildet werden muss, bietet das Verfahren hier große Vorteile.

Das erfindungsgemäße Verfahren wird im Folgenden anhand von zwei Zeichnungen näher erläutert. Es zeigen:
- Figur 1: eine Anordnung für die Durchführung des Verfahrens zur funkenerosiven Bearbeitung von elektrisch nichtleitenden Materialien gemäß der vorliegenden Erfindung in schematischer Darstellung vor dem Beginn der Bearbeitung,
- Figur 2: die Anordnung aus Figur 1 während der Bearbeitung,
- Figur 3: eine Gasturbine,
- Figur 4: eine Turbinenschaufel und
- Figur 5: eine Brennkammer.

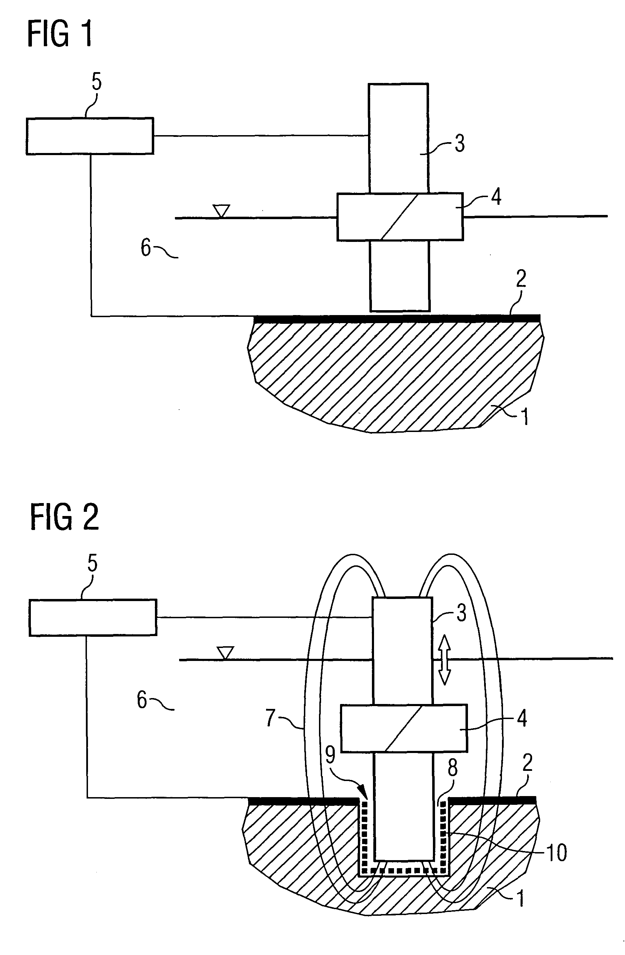

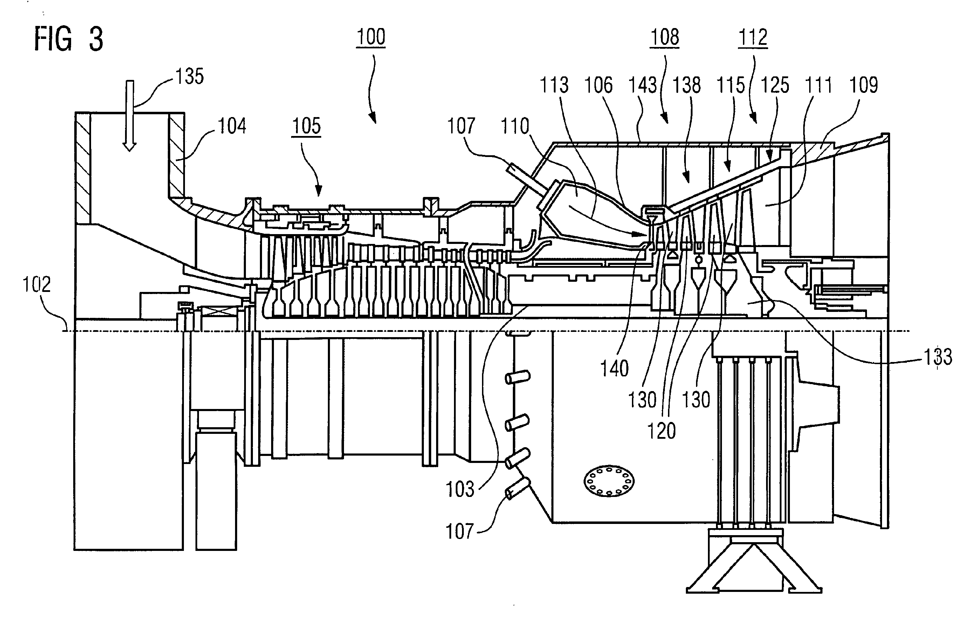

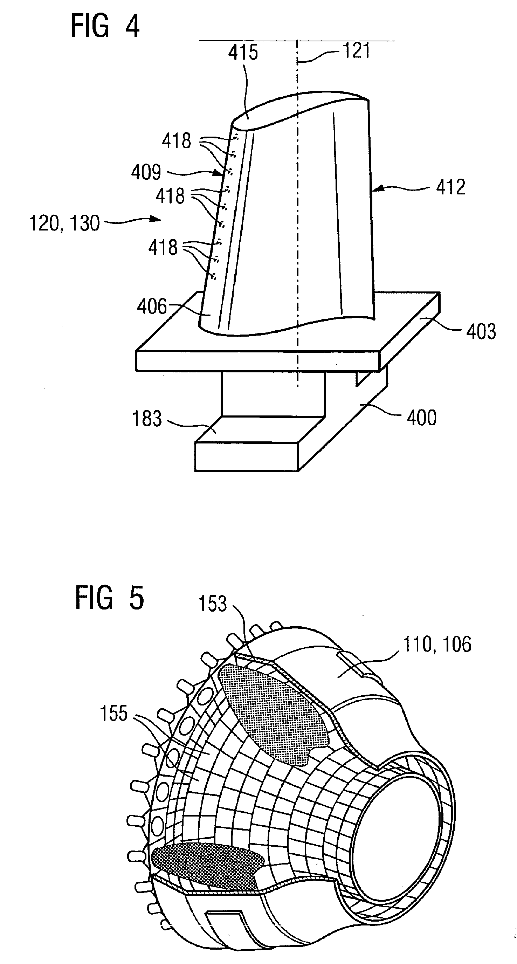

Die Figur 1 zeigt eine Anordnung für die Durchführung des erfindungsgemäßen Verfahrens zur funkenerosiven Bearbeitung von elektrisch nichtleitenden Materialien, hier in der Form eines Bauteils 1, das aus einer Keramik besteht, die Zirkoniumoxid enthalten kann. Das Bauteil 1 kann Teil einer Turbine 100 (Fig. 3) oder einer Brennkammer, z.B. eine Lauf- 120 (Fig. 3, 4) oder Leitschaufel 130 (Fig. 3, 4) sein. Das elektrisch nichtleitende Material kann auch die Beschichtung beispielswese einer Turbinenschaufel bilden, wobei sie als eine Wärmedämmschicht ausgeführt sein kann.

Auf dem Bauteil 1 ist flächig eine elektrisch leitende Substanz hier in Form einer Graphitschicht als eine Assistenzelektrode 2 aufgebracht. Alternativ kann als elektrisch leitende Substanz auch eine organische Verbindung oder ein Metall, wie beispielsweise Zirkonium verwendet werden.

Eine Arbeitselektrode 3 ist unmittelbar beabstandet oberhalb der Assistenzelektrode 2 angeordnet. Sie ist von einer Spule 4 umgebaut, die elektrisch leitend mit einer nicht gezeigten Stromquelle verbunden ist. Die Spule 4 ist durch eine nicht gezeigte Isolationsschicht von der Arbeitselektrode 3 getrennt, so dass kein Stromfluss zwischen der Spule 4 und der Arbeitselektrode 3 möglich ist.

Die Assistenzelektrode 2 und die Arbeitselektrode 3 sind elektrisch leitend mit einem Generator 5 verbunden, der an den beiden Elektroden 2, 3 eine geeignete Spannung anlegt. Die beiden Elektroden 2, 3 sind in ein Dielektrikum 6 getaucht. Hierbei kann es sich beispielsweise um Kerosin oder eine andere im Stand der Technik beschriebene Verbindung handeln.

Um das Bauteil 1 mit Hilfe des erfindungsgemäßen funkenerosiven Verfahrens zu bearbeiten, wird in einem ersten Schritt die Graphitschicht als Assistenzelektrode 2 auf die zu bearbeitende Oberfläche des Bauteils 1 aufgebracht und gemeinsam mit der Arbeitselektrode 3 an den Generator 5 angeschlossen. Anschließend werden das Bauteil 1 sowie zumindest der untere Teil der Arbeitselektrode 3 in das Dielektrikum 6 getaucht und die Arbeitselektrode 3 in unmittelbare Nähe zu der Assistenzelektrode 2 gebracht. An die beiden Elektroden 2, 3 wird mit Hilfe des Generators 5 eine geeignete Spannung angelegt und gleichzeitig durch die Spule 4 ein Strom geleitet, wodurch ein elektromagnetisches Feld 7 ausgebildet wird. Zwischen der Assistenzelektrode 2 und der Arbeitselektrode 3 kommt es zu einer elektrischen Kontaktierung in Form von Funkenschlag, wodurch die Assistenzelektrode 2 und das keramische Material des Bauteils 1 in einem Bearbeitungsbereich 8 verdampft und damit abgetragen werden, um eine Öffnung 9 auszubilden. Im Bereich der Funkenentladung werden Teile des Dielektrikums 6 in Crackprodukte umgewandelt, die dann durch das anliegende elektromagnetische Feld 7 in Richtung des freiliegenden elektrisch nichtleitenden Materials des Bauteils 1 im Bearbeitungsbereich 8 ausgerichtet und/oder beschleunigt werden. Infolge dieser Ausrichtung und/oder Beschleunigung werden sie bevorzugt in dem Bearbeitungsbereich 8 abgeschieden und bilden auf dem Bauteil 1 eine leitende Schicht 10 aus, welche die Assistenzelektrode 2 ersetzt. Bei einer Fortsetzung des Verfahrens kommt es zu einem Funkenschlag zwischen der abgeschiedenen Schicht 10 und der Arbeitselektrode 3, wobei die abgeschiedene Schicht 10 sowie das keramische Material des Bauteils 1 weiter abgetragen werden. Gleichzeitig werden die abgetragenen Bereiche der Schicht 10 kontinuierlich durch die Crackprodukte aufgefüllt.

Eventuell in dem Dielektrikum 6 enthaltene Additive werden durch das elektromagnetische Feld 7 ebenfalls in Richtung des elektrisch nichtleitenden Materials des Bauteils 1 im Bearbeitungsbereich 8 ausgerichtet und/oder beschleunigt, was dazu führt, dass sie gemeinsam mit den Crackprodukten in der leitenden Schicht 10 abgeschieden werden.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen. Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf, die mit dem erfindungsgemäßen Verfahren hergestellt werden.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf, die mit dem erfindungsgemäßen Verfahren hergestellt werden.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

Auch beim Wiederöffnen von Löchern kann das erfindungsgemäße Verfahren verwendet werden.

## Patentansprüche

1. Verfahren zur funkenerosiven Bearbeitung eines elektrisch nichtleitenden Materials (1),
bei dem auf das elektrisch nichtleitende Material (1) eine Assistenzelektrode (2) aufgebracht wird,
die Assistenzelektrode (2) und eine Arbeitselektrode (3) unmittelbar benachbart zueinander angeordnet und von einem Dielektrikum (6), das ein oder mehrere Additive enthalten kann, umgeben werden, und an die Assistenzelektrode (2) und
die Arbeitselektrode (3) eine Spannung angelegt wird, wodurch es zu einer elektrischen Kontaktierung in Form einer Funkenentladung zwischen den Elektroden (2, 3) kommt, in deren Folge die Assistenzelektrode (2) und das elektrisch nichtleitende Material (1) in einem Bearbeitungsbereich (8) abgetragen werden und gleichzeitig ein Teil des Dielektrikums (6) in Crackprodukte umgewandelt und auf dem nichtleitenden Material (1) abgeschieden wird,
**dadurch gekennzeichnet, dass**
ein elektrisches und/oder magnetisches und/oder elektromagnetisches Feld (7) erzeugt wird, welches die Crackprodukte und/oder Additive in Richtung des Bearbeitungsbereichs (8) ausrichtet und/oder beschleunigt.

2. Verfahren nach Anspruch 1,
**dadurch gekennzeichnet, dass**
ein elektromagnetisches Feld (7) durch eine stromdurchflossene Spule (4) erzeugt wird.

3. Verfahren nach einem der Ansprüche 1 oder 2 ,
**dadurch gekennzeichnet, dass**
das elektrisch nichtleitende Material (1) eine Keramik ist.

4. Verfahren nach Anspruch 3,
**dadurch gekennzeichnet, dass**
die Keramik voll- oder teilstabilisiertes Zirkoniumoxid enthält oder daraus besteht.

5. Verfahren nach einem der Ansprüche 1 bis 4,
**dadurch gekennzeichnet, dass**
das elektrisch nichtleitende Material (1) eine Beschichtung auf einem Bauteil ist.

6. Verfahren nach Anspruch 5,
**dadurch gekennzeichnet, dass**
die Beschichtung eine Wärmedämmschicht ist.

7. Verfahren nach einem der Ansprüche 5 oder 6,
**dadurch gekennzeichnet, dass**
das Bauteil ein Teil einer Turbine ist.

8. Verfahren nach Anspruch 7,
**dadurch gekennzeichnet, dass**
das Bauteil eine Lauf- oder eine Leitschaufel ist.
